# FASCICULE DE BREVET EUROPEEN

(11) **EP 3 827 119 B1**
(45) Date de publication et mention de la délivrance du brevet: **30.11.2022**
(21) Numéro de dépôt: 19753173.4
(22) Date de dépôt: 18.07.2019
(51) Int. Cl.: D03D 1/00, D03D 11/00, D03D 25/00, B29B 11/16, D03D 15/267, D03D 15/275

(54) **TEXTURE FIBREUSE POUR CARTER EN MATÉRIAU COMPOSITE À RÉSISTANCE À L'IMPACT AMÉLIORÉE**
FASERSTRUKTUR FÜR EIN GEHÄUSE AUS VERBUNDWERKSTOFF MIT VERBESSERTER SCHLAGZÄHIGKEIT
FIBER TEXTURE FOR A CASING MADE OF COMPOSITE MATERIAL WITH IMPROVED IMPACT RESISTANCE

(30) Priorité: 23.07.2018 FR 1856798
(43) Date de publication de la demande: 02.06.2021
(73) Titulaire: SAFRAN, 75015 Paris (FR); SAFRAN AIRCRAFT ENGINES, 75015 Paris (FR)
(72) Inventeur: CHARLEUX, François, 77550 MOISSY-CRAMAYEL (FR); COUPE, Dominique, Marie, Christian, 77550 MOISSY-CRAMAYEL (FR); GRELIN, Hervé, 77550 MOISSY-CRAMAYEL (FR)
(74) Mandataire: Cabinet Beau de Loménie
(86) Numéro de dépôt international: PCT/FR2019/051807
(87) Numéro de publication internationale: WO 2020/021185

(56) Documents cités:
- WO-A1-2017/109403
- CN-A- 101 713 115
- FR-A1- 2 706 913
- US-A- 5 538 781

## Description

### Arrière-plan de l'invention

La présente invention concerne une texture fibreuse qui peut être utilisée, en particulier mais non exclusivement, pour former le renfort fibreux d'un carter de soufflante de moteur aéronautique en matériau composite.

La fabrication d'un carter en matériau composite débute par la réalisation d'une texture fibreuse sous forme de bande, la texture fibreuse étant réalisée par tissage tridimensionnel entre une pluralité de couches de fils de chaîne et une pluralité de couches de fils de trame. La texture fibreuse ainsi obtenue est enroulée sur plusieurs tours sur un moule ou outillage présentant la forme du carter à réaliser et maintenue entre le moule et des segments formant contre-moule de manière à obtenir une préforme fibreuse.

Une fois la préforme fibreuse réalisée, c'est-à-dire à la fin de l'enroulement de la texture fibreuse, l'outillage portant la préforme fibreuse est fermé par des contres-moules puis transporté jusqu'à une étuve ou four dans lequel la densification de la préforme par une matrice est réalisée, la matrice pouvant être notamment obtenue par injection et polymérisation d'une résine dans la préforme fibreuse.

Un carter de soufflante remplit trois fonctions principales, à savoir :
- assurer la liaison de pièces du moteur entre elles,
- définir la veine d'entrée d'air dans le moteur,
- assurer la rétention en retenant les débris ingérés à l'intérieur du moteur, ou les aubes ou fragments d'aubes projetés par centrifugation, afin d'éviter qu'ils ne traversent le carter et n'atteignent d'autres parties de l'aéronef.

Les deux premières fonctions s'avèrent peu exigeantes en termes de propriétés mécaniques mais sont actives en permanence. En revanche, la troisième fonction, même si elle est très peu utilisée, est très exigeante en termes de propriétés mécaniques.

Pendant un événement de perte d'aube de soufflante (FBO), l'événement peut se scinder en différentes phases pour le carter :
Phase 1 : contact entre l'aube et le carter,
Phase 2 : cisaillement par le bord d'attaque de l'aube perdue de la matière du carter,
Phase 3 : mise en déformation du carter sous l'effet d'une énergie importante,
Phase 4 : restitution de l'énergie emmagasinée dans le carter liée au fragment de l'aube perdue,
Phase 5 : établissement de la rotation en moulinet (« Windmilling »).

Durant la phase 1, c'est une importante raideur qui est demandée au carter afin de se déformer au minimum sous l'effet du contact avec l'aube. Durant cette phase de l'énergie est stockée par le carter sous forme de déformation.

Durant la phase 2, le matériau du carter doit montrer des propriétés de cisaillement. Le matériau est cisaillé et l'énergie est dissipée par ce cisaillement.

Durant la phase 3, le projectile pénètre plus difficilement le carter et l'énergie emmagasinée par le projectile est intégralement absorbée par la déformation du carter. Durant cette phase, un haut taux de déformation est demandé au matériau du carter.

Durant la phase 4, l'énergie est restituée par déformation du carter pour revenir à la géométrie initiale.

Durant la phase 5, le carter est soumis à une sollicitation en fatigue avec un chargement mécanique important.

Les carters de l'état de la technique assurent globalement cette fonction de manière satisfaisante. Il demeure toutefois possible d'améliorer encore la résistance mécanique de certains carters à l'impact avec un projectile, en particulier une aube lorsqu'il y a détachement de cette dernière et projection de celle-ci sur le carter.

Un exemple de carter de soufflante en matériau composite avec une zone de rétention renforcée est décrit notamment dans le document WO 2017/109403.

### Objet et résumé de l'invention

L'invention vise, selon un premier aspect, une texture fibreuse présentant une forme de bande s'étendant dans une direction longitudinale sur une longueur déterminée entre une partie proximale et une partie distale et dans une direction latérale sur une largeur déterminée entre un premier bord latéral et un deuxième bord latéral, la texture fibreuse présentant un tissage tridimensionnel ou multicouche entre une pluralité de couches de fils ou torons de chaîne s'étendant dans la direction longitudinale et une pluralité de couches de fils ou torons de trame s'étendant dans la direction latérale,
caractérisée en ce que la texture fibreuse comprend une première portion s'étendant suivant la direction longitudinale sur une longueur déterminée à partir de la partie proximale et dans laquelle une ou plusieurs couches de la pluralité couches de fils ou torons de trame sont constituées d'une pluralité de groupes de fils ou torons comprenant chacun au moins un fil ou toron en fibres de carbone et un fil ou torons en fibres de verre, le fil ou toron en fibres de carbone et le fil ou torons en fibres de verre de chaque groupe de fils étant tissés ensemble suivant le même motif ou armure de tissage, la texture fibreuse comprenant en outre une deuxième portion présente suivant la direction longitudinale entre la première portion et la partie distale de ladite texture fibreuse dans laquelle les couches de la pluralité de fils ou torons de trame comportent des fils ou torons en fibres de carbone.

La texture fibreuse est destinée à être enroulée en plusieurs tours afin de former un renfort fibreux de carter en matériau composite. La première portion est destinée à former la partie radialement interne de ce renfort fibreux (premier(s) tour(s) de l'enroulement). La deuxième portion est destinée à former la partie radialement externe de ce renfort fibreux (dernier(s) tour(s) de l'enroulement).

Les inventeurs ont constaté qu'il était possible d'améliorer la résistance du carter à l'impact, par exemple avec une aube détachée, par un placement judicieux de fils ou torons en fibre de verre parmi les fils ou torons en fibres de carbone dans la texture fibreuse. En effet, les fils ou torons en fibres de verre présentent une résistance au cisaillement et à l'allongement en traction bien supérieure à celle présentée par les fils ou torons en fibres de carbone. Ainsi, la texture fibreuse selon l'invention comprend des fils ou torons de trame en fibres de verre dans la première portion destinée à former le début de l'enroulement et située du côté de l'impact avec l'aube, afin de conférer une plus grande résistance au cisaillement à cette première portion. En outre, l'insertion de fils ou torons en fibres de verre en sens trame est particulièrement adaptée à la cinétique d'un événement de perte d'aube car la plus grande dimension du projectile est positionnée perpendiculairement aux fils ou torons de trame.

On limite ainsi la profondeur de pénétration d'un projectile, par exemple une aube ou partie d'aube, impactant la surface interne du carter. On préserve ainsi une partie plus importante du matériau du carter, ce qui permet d'assurer efficacement la gestion des phases décrites ci-avant (notamment phases 3 à 5) lors d'un événement de perte d'aube ou fraction d'aube.

En utilisant des groupes de fils ou torons comprenant chacun au moins un fil ou toron en fibres de carbone et un fil ou torons en fibres de verre dans la première portion, il est possible de réaliser deux fonctions différentes. En effet, les fils ou torons en fibres de carbone confèrent une raideur axiale nécessaire à la fonction mécanique demandée au carter notamment pendant les phases 1 à 5 décrites précédemment tandis que les fils ou torons en fibres de verre confèrent une grande résistance au cisaillement pour la fonction d'absorption en cisaillement demandée au carter durant la phase 2, décrites précédemment.

L'invention repose donc sur la mise en œuvre de deux matériaux différents, à savoir le carbone et le verre, localisés dans des zones particulières du renfort fibreux, afin de répondre, de manière optimale, aux sollicitations du carter lors d'un événement d'impact, par exemple une perte d'aube ou fraction d'aube, tout en limitant la masse de ce dernier.

Dans un exemple de réalisation, des couches de la pluralité couches de fils ou torons de trame présentes dans la première portion du côté d'une face interne de la texture fibreuse comportent ou sont constitués d'une pluralité de groupes de fils ou torons comprenant chacun au moins un fil ou toron en fibres de carbone et un fil ou torons en fibres de verre, les autres couches de fils ou torons de trame présentes du côté d'une face externe de la texture fibreuse étant constitués ou comportant des fils ou torons en fibres de carbone. Cela permet de conserver une bonne rigidité dans cette première portion et limiter l'impact de l'utilisation de fils ou torons en fibres de verre, ceux-ci ayant une masse plus importante que les fils ou torons en fibres de carbone.

Dans un exemple de réalisation, la première portion de la texture fibreuse comporte une partie de rétention s'étendant en retrait des bords latéraux de ladite structure fibreuse suivant la direction latérale, la partie de rétention comprenant un nombre de fils ou torons en fibres de verre plus important que dans les parties adjacentes à la partie de rétention suivant la direction latérale. La partie de rétention est destinée à être présente en regard des aubes et définit la zone de rétention du carter à obtenir. Cette zone de rétention du carter a pour fonction de retenir les débris, particules ou objets ingérés en entrée du moteur, ou les aubes ou fragments d'aube détachés et projetés radialement par centrifugation contre le carter. Ainsi, les fils ou torons en fibres de verre dont la masse est plus importante que celle des fils ou torons en fibres de carbone sont concentrés dans la zone susceptible d'être impactée par un projectile, en particulier une aube ou un fragment d'aube. On allège ainsi la masse globale du carter.

L'invention vise également une préforme fibreuse de carter aéronautique comprenant un enroulement sur plusieurs tours d'une texture fibreuse telle que décrite plus haut, la première portion étant située du côté d'une face radialement interne de la préforme, et la deuxième portion étant située du côté d'une face radialement externe de la préforme.

L'invention vise également un carter de turbine à gaz en un matériau composite, comprenant un renfort fibreux constitué d'une préforme fibreuse telle que décrite plus haut, et une matrice densifiant le renfort fibreux.

Dans un exemple de réalisation, ledit carter est un carter de soufflante de turbine à gaz.

L'invention vise également un moteur aéronautique à turbine à gaz ayant un carter tel que décrit plus haut.

L'invention a encore pour objet un procédé de fabrication d'une texture fibreuse par tissage tridimensionnel ou multicouche entre une pluralité de couches de fils ou torons de chaîne s'étendant dans une direction longitudinale et une pluralité de couches de fils ou torons de trame s'étendant dans la direction latérale, la structure fibreuse présentant une forme de bande s'étendant dans la direction longitudinale sur une longueur déterminée entre une partie proximale et une partie distale et dans la direction latérale sur une largeur déterminée entre un premier bord latéral et un deuxième bord latéral, caractérisé en ce qu'il comprend le tissage d'une première portion s'étendant suivant la direction longitudinale sur une longueur déterminée à partir de la partie proximale et dans laquelle une ou plusieurs couches de la pluralité couches de fils ou torons de trame sont constituées d'une pluralité de groupes de fils ou torons comprenant chacun au moins un fil ou toron en fibres de carbone et un fil ou torons en fibres de verre, le fil ou toron en fibres de carbone et le fil ou torons en fibres de verre de chaque groupe de fils étant tissés ensemble suivant le même motif ou armure de tissage, le procédé comprenant en outre le tissage d'une deuxième portion présente suivant la direction longitudinale entre la première portion et la partie distale de ladite texture fibreuse dans laquelle les couches de la pluralité de fils ou torons de trame comportent des fils ou torons en fibres de carbone.

Dans un exemple de réalisation, des couches de la pluralité couches de fils ou torons de trame présentes dans la première portion du côté d'une face interne de la texture fibreuse comportent ou sont constituées d'une pluralité de groupes de fils ou torons comprenant chacun au moins un fil ou toron en fibres de carbone et un fil ou torons en fibres de verre, les autres couches de fils ou torons de trame présentes du côté d'une face externe de la texture fibreuse comportant ou étant constitués de fils ou torons en fibres de carbone.

Dans un exemple de réalisation, la première portion de la texture fibreuse comporte une partie de rétention s'étendant en retrait des bords latéraux de ladite structure fibreuse suivant la direction latérale, une partie d'entrée de fils ou torons située entre le premier bord latéral de la texture fibreuse et la partie de rétention et dans laquelle des fils ou torons en fibres de verre sont progressivement insérés dans des couches de la pluralité couches de fils ou torons de trame, et une partie de sortie de fils ou torons située entre la partie de rétention et le deuxième bord latéral de la texture fibreuse et dans laquelle des fils ou torons en fibres de verre sont progressivement retirés des couches de la pluralité couches de fils ou torons de trame, la partie de rétention comprenant un nombre de fils ou torons en fibres de verre plus important que dans les parties d'entrée et de sortie des fils ou torons.

### Brève description des dessins

D'autres caractéristiques et avantages de l'invention ressortiront de la description suivante, donnée à titre non limitatif, en référence aux dessins annexés, sur lesquels :
- la figure 1 est une vue schématique en perspective d'un métier à tisser montrant le tissage tridimensionnel d'une texture fibreuse,
- la figure 2 est une vue schématique en perspective d'une texture fibreuse conformément à un mode de réalisation de l'invention,
- la figure 3 est une coupe transversale prise au niveau de la première portion de la texture fibreuse de la figure 2 et montrant un plan d'armure de tissage,
- la figure 4 est une coupe transversale prise au niveau de la deuxième portion de la texture fibreuse de la figure 2 et montrant un plan d'armure de tissage,
- la figure 5 est une vue schématique en perspective montrant l'enroulement d'une texture fibreuse sur un outillage de mise en forme,
- la figure 6 est une demi-vue en coupe axiale d'une préforme de carter obtenue par enroulement d'une texture fibreuse comme montré sur la figure 5,
- la figure 7 est une vue en coupe montrant le positionnement de secteurs d'injection sur la préforme du carter de la figure 6,
- la figure 8 est une vue en perspective d'un moteur aéronautique conformément à un mode de réalisation de l'invention,
- les figures 9A et 9B montrent une coupe transversale prise au niveau de la première portion d'une variante de texture fibreuse selon l'invention et montrant un plan d'armure de tissage.

### Description détaillée de modes de réalisation

L'invention s'applique d'une manière générale à des textures fibreuses destinées à la fabrication de carters en matériau composite, ces carters comportant un fût ou une virole avec des brides annulaires à leurs extrémités.

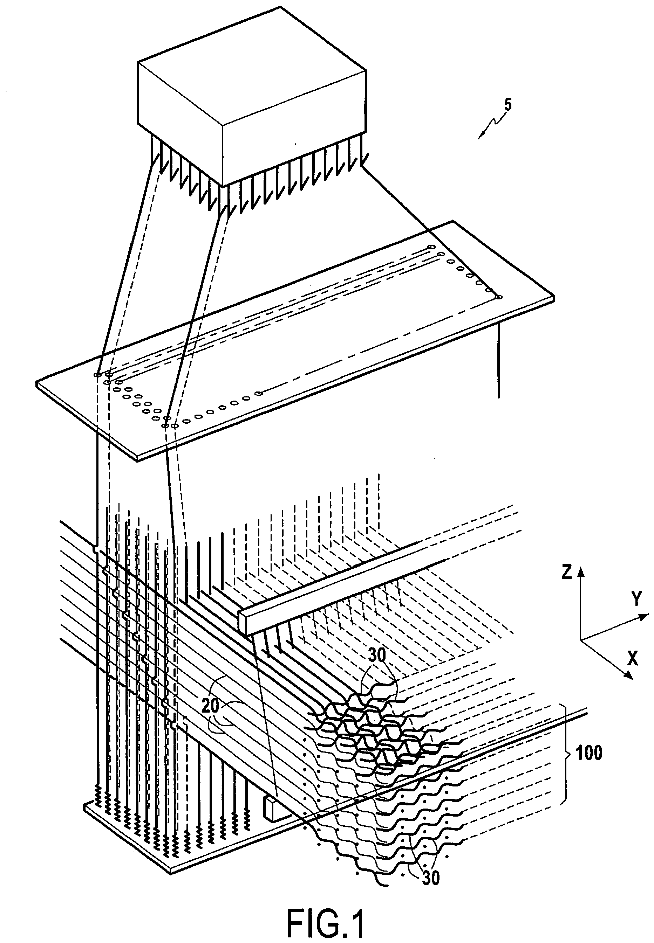

Comme représentée sur la figure 1, une texture fibreuse 100 est réalisée de façon connue par tissage au moyen d'un métier à tisser de type jacquard 5 sur lequel on a disposé un faisceau de fils de chaîne ou torons 20 en une pluralité de couches, les fils de chaîne étant liés par des fils ou torons de trame 30.

La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. Des armures de tissage de type interlock utilisables sont décrites dans le document WO 2006/136755. D'autres armures de tissage sont envisageables comme par exemple multi-toile, multi-satin et multi-sergé. Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles. Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles. Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

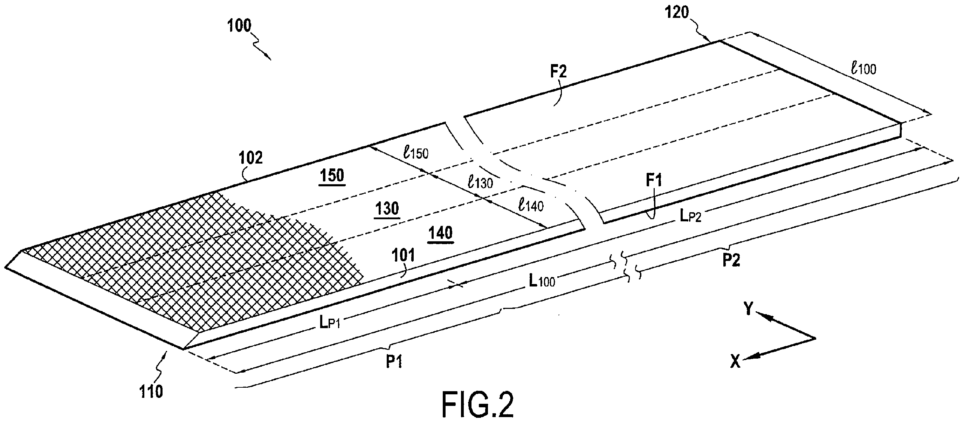

Comme illustrée sur la figure 2, la texture fibreuse 100 présente une forme de bande qui s'étend en longueur dans une direction longitudinale X correspondant à la direction de défilement des fils ou torons de chaîne 20 et en largeur ou transversalement dans une direction latérale Y entre un premier et un deuxième bords latéraux 101 et 102, la direction latérale Y correspondant à la direction des fils ou torons de trame 30. La texture fibreuse s'étend longitudinalement sur une longueur déterminée L₁₀₀ dans la direction X entre une partie proximale 110 destinée à former le début de l'enroulement d'une préforme fibreuse sur un outillage de mise en forme et une partie distale 120 destinée à former la fin de l'enroulement de la préforme fibreuse.

La texture fibreuse présente en outre une zone centrale 130 s'étendant sur une largeur déterminée I₁₃₀ dans la direction Y, la zone centrale 130 étant destinée à former le fût ou la virole du carter. La zone centrale 130 est destinée à être présente en regard des aubes et définit la zone de rétention du carter à obtenir. La zone centrale 130 est située en retrait des premier 101 et deuxième 102 bords latéraux et s'étend sur une largeur déterminée I₁₃₀ inférieure à la largeur I₁₀₀ de la texture 100. La zone centrale 130 est à une position intermédiaire entre les premier et deuxième bords latéraux 101 et 102. La zone centrale 130 est délimitée entre deux zones latérales 140 et 150 s'étendant chacune sur une largeur déterminée, respectivement I₁₄₀ et I₁₅₀, dans la direction Y. La première zone latérale 140 s'étend entre le premier bord latéral 101 et la zone centrale 130. La deuxième zone latérale 150 s'étend entre le deuxième bord latéral 102 et la zone centrale 130. Chacune des zones latérales 140 et 150 est destinée au moins en partie à former une bride annulaire du carter.

La longueur L₁₀₀ de la texture fibreuse 100 est déterminée en fonction de la circonférence de l'outillage ou du moule de mise en forme de manière à permettre la réalisation d'un nombre de tours déterminé de la texture fibreuse, par exemple quatre tours.

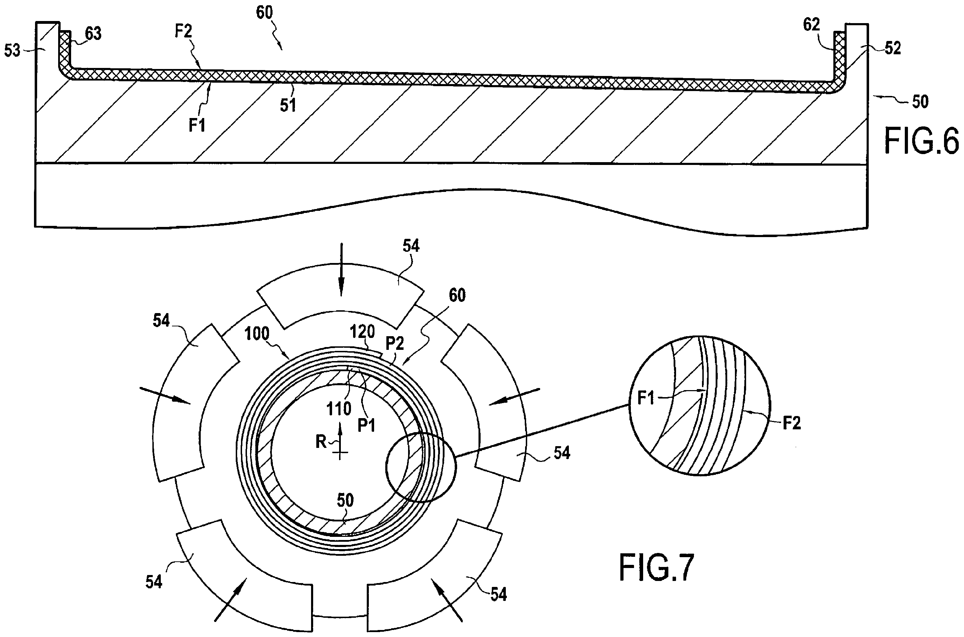

La texture fibreuse 100 comporte une première portion P1 qui s'étend à partir de la partie proximale 110 suivant la direction X. La première portion P1 est destinée à former la première partie de l'enroulement formant le renfort fibreux du carter (partie radialement interne de cet enroulement, voir figure 7 qui fait figurer la direction radiale R).

La texture fibreuse 100 comporte en outre une deuxième portion P2, distincte de la première portion P1, et qui s'étend suivant la direction longitudinale X entre la première portion P1 et la partie distale 120. La deuxième portion P2 est destinée à former la deuxième partie de l'enroulement formant le renfort fibreux du carter (partie radialement externe de cet enroulement).

Dans l'exemple décrit ici, la texture fibreuse 100 s'étend sur une longueur L₁₀₀ permettant de faire quatre tours d'enroulement sur l'outillage ou du moule de mise en forme. Toujours dans l'exemple décrit ici, la première portion P1 s'étend sur une longueur L_{P1} définie de manière à correspondre au premier tour d'enroulement sur l'outillage ou moule de mise en forme (figure 7), la deuxième portion P2 correspondant aux deuxième, troisième et quatrième tours d'enroulement sur l'outillage ou moule de mise en forme (figure 7).

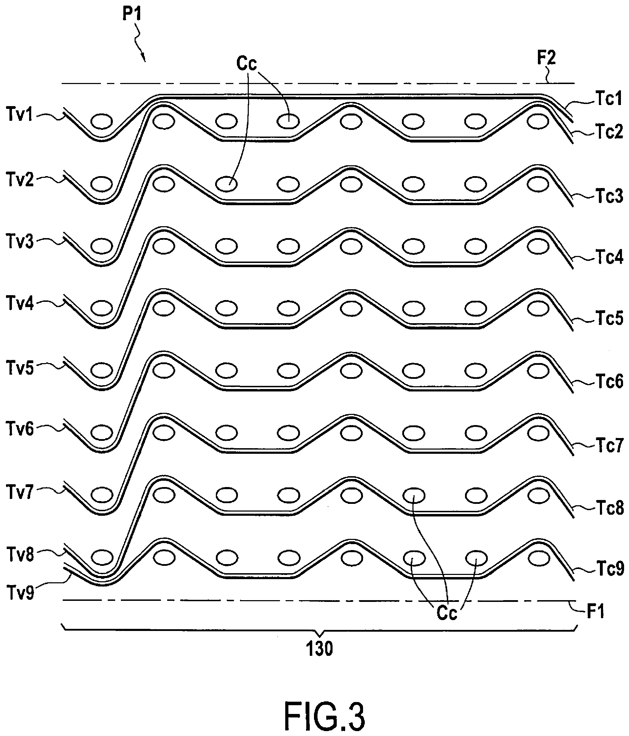

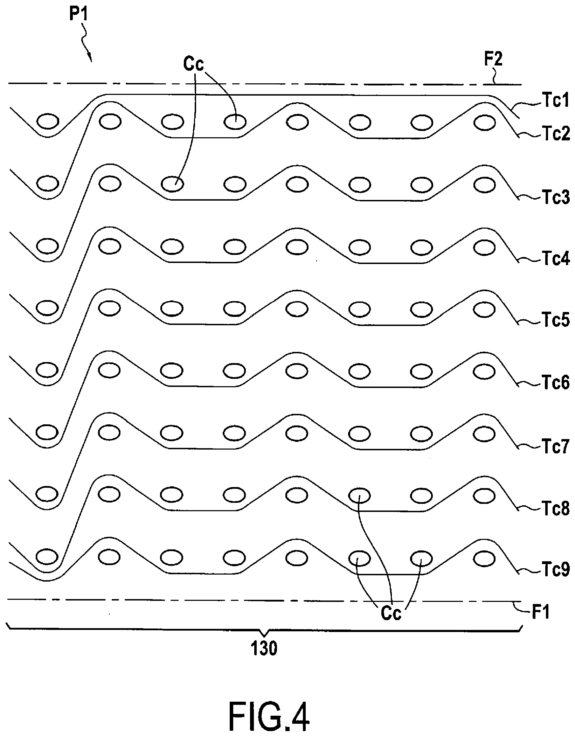

Les figures 3 et 4 illustrent chacune un plan de l'armure de tissage de type multi-toile de la texture fibreuse 100 situé respectivement au niveau de la première portion P1 et de la deuxième portion P2.

Les exemples de plans d'armure illustrés aux figures 3 et 4 comprennent 9 couches de trame et 8 couches de chaîne.

Comme illustré à la figure 3, la première portion P1 comporte des fils ou torons de chaîne en fibres de carbone, notés Cc. Conformément à l'invention, les couches de la pluralité couches de fils ou torons de trame sont constituées d'une pluralité de groupes de fils ou torons comprenant chacun au moins un fil ou toron en fibres de carbone et un fil ou torons en fibres de verre, le fil ou toron en fibres de carbone et le fil ou torons en fibres de verre de chaque groupe de fils étant tissés ensemble suivant le même motif ou armure de tissage. Dans l'exemple décrit ici, les 9 couches de fils de trame sont toutes constituées de groupes de fils ou torons comprenant chacun un fil ou toron en fibres de carbone, noté Tc1 à Tc9, et un fil ou torons en fibres de verre, noté Tv1 à Tv9.

Selon une variante de réalisation, seules certaines couches de la pluralité couches de fils ou torons de trame présentes du côté d'une face interne de la texture fibreuse sont constituées d'une pluralité de groupes de fils ou torons comprenant un fil ou toron en fibres de carbone et un fil ou torons en fibres de verre, les autres couches de la pluralité couches de fils ou torons de trame étant constituées de fils ou torons en fibres de carbone. Il peut s'agir par exemple des quatre premières couches à partir de la face interne F1 de la texture fibreuse 100 tandis que les autres couches de fils ou torons de trame situées du côté de la face externe F2 de la texture fibreuse sont constituées seulement de fils ou torons en fibres de carbone.

Comme illustré à la figure 4, la deuxième portion P2 comporte des fils ou torons de chaîne en fibres de carbone, notés Cc, et des fils ou torons de trame en fibres de carbone Tc.

Il y a donc une évolution de la nature des fils ou torons de trame lorsque l'on se déplace le long de la direction longitudinale X de la texture fibreuse 100.

On vient de décrire un exemple dans lequel la texture fibreuse a une armure de tissage interlock à 9 couches de trame et 8 couches de chaîne. On ne sort toutefois pas du cadre de l'invention lorsque le nombre de couches de trame et de chaine est différent, ou lorsque la texture fibreuse présente une armure de tissage différente d'une armure de type multi-toile.

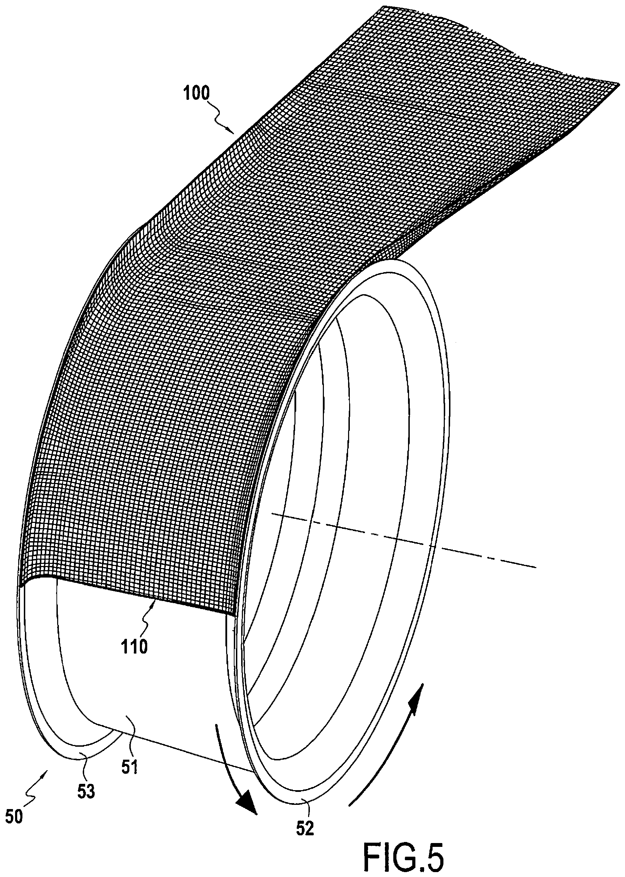

Comme illustré sur la figure 5, un renfort fibreux de carter est formé par enroulement sur un mandrin 50 de la texture fibreuse 100 décrite précédemment, le renfort fibreux constituant une préforme fibreuse tubulaire complète d'un carter formant une seule pièce. A cet effet, le mandrin 50 présente une surface externe 51 dont le profil correspond à la surface interne du carter à réaliser. Le mandrin 50 comporte également deux flasques 52 et 53 pour former des parties de préforme fibreuse 62 et 63 correspondant aux brides du carter (les brides 62 et 63 sont visibles à la figure 6). Le ou les tours situés radialement vers l'intérieur de la préforme correspondent à la première portion P1 de la texture fibreuse et le ou les tours situés radialement vers l'extérieur de la préforme correspondent à la deuxième portion P2 de la texture fibreuse.

La figure 6 montre une vue en coupe de la préforme fibreuse 60 obtenue après enroulement de la texture fibreuse 100 en plusieurs couches sur le mandrin 50. Le nombre de couches ou spires est fonction de l'épaisseur désirée et de l'épaisseur de la texture fibreuse. Il est de préférence au moins égal à 2. Dans l'exemple décrit ici, la préforme 60 comprend 4 couches de texture fibreuse 100.

On procède ensuite à la densification de la préforme fibreuse 60 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide. Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 7, la préforme fibreuse 60 est ici placée entre une pluralité de secteurs 54 formant contre-moule et le mandrin 50 formant support, ces éléments présentant respectivement la forme extérieure et la forme intérieure du carter à réaliser. Ensuite, on injecte le précurseur liquide de matrice, par exemple une résine, dans tout le logement pour imprégner la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse peut être réalisée par le procédé bien connu de moulage par transfert dit RTM (« Resin Transfert Moulding »). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

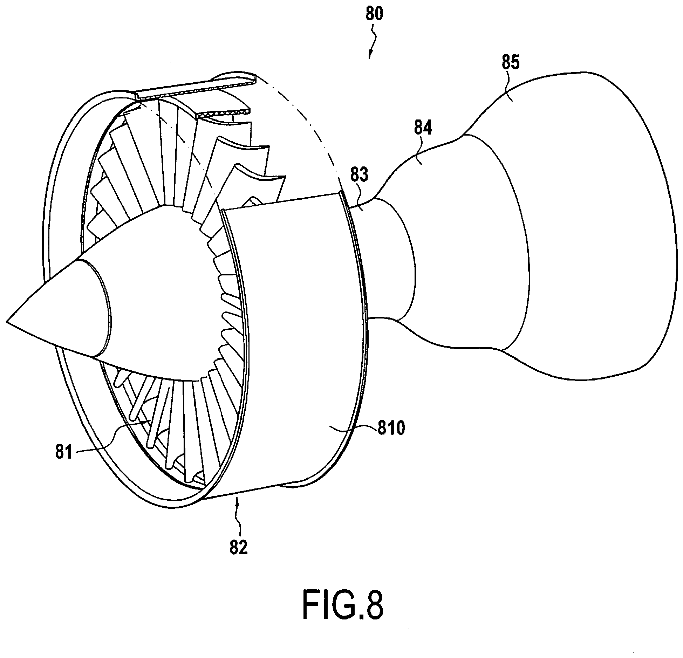

Après l'injection et la polymérisation, la pièce est démoulée. La pièce est finalement détourée pour enlever l'excès de résine et les chanfreins sont usinés pour obtenir un carter 810 présentant une forme de révolution comme illustré sur la figure 8.

Le carter 810 représenté sur la figure 8 est un carter d'une soufflante de moteur aéronautique à turbine à gaz 80. Un tel moteur, comme montré très schématiquement par la figure 8 comprend, de l'amont vers l'aval dans le sens de l'écoulement de flux gazeux, une soufflante 81 disposée en entrée du moteur, un compresseur 82, une chambre de combustion 83, une turbine haute-pression 84 et une turbine basse pression 85. Le moteur est logé à l'intérieur d'un carter comprenant plusieurs parties correspondant à différents éléments du moteur. Ainsi, la soufflante 81 est entourée par le carter 810.

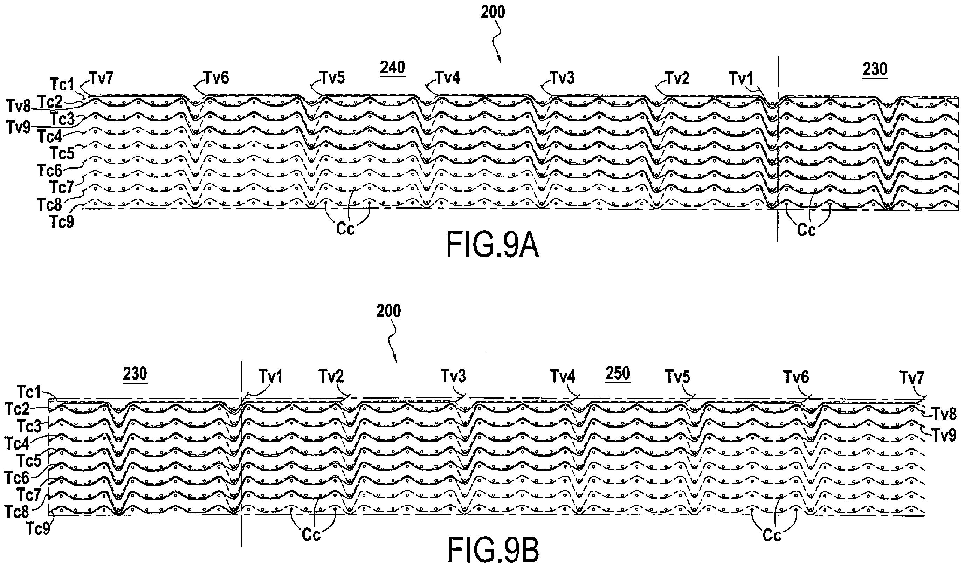

On a représenté aux figures 9A et 9B une variante de texture fibreuse selon l'invention, dans laquelle les fils ou torons en fibres de verre utilisés pour doubler les fils ou torons en fibres de carbone dans les couches de fils ou torons de trame dans la première portion sont concentrés dans une zone de la texture fibreuse destinée à former la zone de rétention du carter, à savoir la zone en regard des aubes susceptible d'être impactée par le détachement d'une aube ou d'un fragment d'aube.

Plus précisément et comme illustrée sur la figure 9A, la première zone latérale 240 (similaire à la zone latérale 140 de la texture fibreuse 100 de la figure 2) de la texture fibreuse 200 correspond à une partie d'entrée dans laquelle les fils ou torons en fibres de verre Tv1 à Tv9 sont progressivement insérés dans les couches de la pluralité couches de fils ou torons de trame de manière à être regroupés respectivement avec les fils ou torons en fibres de carbone Tc1 à Tc9 en suivant le même motif ou armure de tissage.

Dans la zone centrale 230 (similaire à la zone centrale 130 de la texture fibreuse 100 de la figure 2), tous les fils ou torons en fibres de verre Tv1 à Tv9 ont été introduits dans la texture fibreuse si bien que la zone centrale 230 concentre la majorité des fils ou torons de fils en fibres de verre, la zone 230 formant une partie de rétention comprenant un nombre de fils ou torons en fibres de verre plus important que dans les parties d'entrée et de sortie des fils ou torons. La zone centrale 230 est la plus sollicitée mécaniquement lors de l'impact avec une aube ou un fragment d'aube détaché.

Comme illustrée sur la figure 9B, la deuxième zone latérale 250 de la texture fibreuse 200 (similaire à la zone latérale 150 de la texture fibreuse 100 de la figure 2) correspond à une partie de sortie dans laquelle les fils ou torons en fibres de verre Tv1 à Tv9 sont progressivement retirés des couches de la pluralité couches de fils ou torons de trame de manière à être séparés respectivement des fils ou torons en fibres de carbone Tc1 à Tc9.

Par ailleurs, selon une variante de réalisation, les fils ou torons en fibres de verre présents au niveau des surfaces inférieure F1 et supérieure F2 de la texture fibreuse dans la couche de fils de trame peuvent être conservés tandis que les autres fils ou torons en fibres de verre présents en-dessous des surfaces inférieure F1 et supérieure F2 de la texture fibreuse sont progressivement retirés en dehors de la zone centrale de la texture fibreuse. En d'autres termes, les fils ou torons en fibres de verre présents dans les groupes de fils ou torons de la première couche de fils ou torons de trame située au plus près de la surface interne F1 et de la surface externe F2 de la texture fibreuse sont continus sur toute la longueur de la texture tandis que les fils ou torons de fibres de verres présents dans les groupes de fils ou torons des autres couches de fils ou torons de trame sous-jacentes sont progressivement retirés de la texture en dehors de la zone centrale comme décrit ci-avant. On obtient ainsi une texture fibreuse avec une première portion ayant des fils ou torons en fibres de verre continues sur ses deux surfaces. Selon encore une autre variante, seule une surface, interne ou externe, de la texture fibreuse peut être munie de fils ou torons en fibres de verre continus.

## Revendications

1. Texture fibreuse (100) présentant une forme de bande s'étendant dans une direction longitudinale (X) sur une longueur déterminée (L₁₀₀) entre une partie proximale (110) et une partie distale (120) et dans une direction latérale (Y) sur une largeur déterminée (I₁₀₀) entre un premier bord latéral (101) et un deuxième bord latéral (102), la texture fibreuse présentant un tissage tridimensionnel ou multicouche entre une pluralité de couches de fils ou torons de chaîne (20) s'étendant dans la direction longitudinale et une pluralité de couches de fils ou torons de trame (30) s'étendant dans la direction latérale,
**caractérisée en ce que** la texture fibreuse comprend une première portion (P1) s'étendant suivant la direction longitudinale sur une longueur déterminée (L_{P1}) à partir de la partie proximale (110) et dans laquelle une ou plusieurs couches de la pluralité couches de fils ou torons de trame sont constituées d'une pluralité de groupes de fils ou torons comprenant chacun au moins un fil ou toron en fibres de carbone (Tc1-Tc9) et un fil ou torons en fibres de verre (Tv1-Tv9), le fil ou toron en fibres de carbone et le fil ou torons en fibres de verre de chaque groupe de fils étant tissés ensemble suivant le même motif ou armure de tissage, la texture fibreuse comprenant en outre une deuxième portion (P2) présente suivant la direction longitudinale entre la première portion et la partie distale de ladite texture fibreuse dans laquelle les couches de la pluralité de fils ou torons de trame comportent des fils ou torons en fibres de carbone (Tc1-Tc9).

2. Texture fibreuse selon la revendication 1, dans laquelle des couches de la pluralité des couches de fils ou torons de trame présentes dans la première portion du côté d'une face interne (F1) de la texture fibreuse (100) comportent une pluralité de groupes de fils ou torons comprenant chacun au moins un fil ou toron en fibres de carbone et un fil ou torons en fibres de verre, les autres couches de fils ou torons de trame présentes du côté d'une face externe (F2) de la texture fibreuse comportant des fils ou torons en fibres de carbone.

3. Texture fibreuse selon la revendication 1 ou 2, dans laquelle la première portion de la texture fibreuse comporte une partie de rétention (130) s'étendant en retrait des bords latéraux (101, 102) de ladite structure fibreuse suivant la direction latérale (Y), la partie de rétention comprenant un nombre de fils ou torons en fibres de verre plus important que dans les parties adjacentes (140, 150) à la partie de rétention suivant la direction latérale.

4. Préforme fibreuse (60) de carter aéronautique (810) comprenant un enroulement sur plusieurs tours d'une texture fibreuse (100) selon l'une quelconque des revendications 1 à 3, la première portion (P1) étant située du côté d'une face radialement interne de la préforme, et la deuxième portion (P2) étant située du côté d'une face radialement externe de la préforme.

5. Carter (810) de turbine à gaz en un matériau composite, comprenant un renfort fibreux constitué d'une préforme fibreuse (60) selon la revendication 4, et une matrice densifiant le renfort fibreux.

6. Carter (810) selon la revendication 5, dans lequel ledit carter est un carter de soufflante de turbine à gaz.

7. Moteur aéronautique à turbine à gaz (80) ayant un carter (810) selon la revendication 5 ou 6.

8. Procédé de fabrication d'une texture fibreuse (100) par tissage tridimensionnel ou multicouche entre une pluralité de couches de fils ou torons de chaîne (20) s'étendant dans une direction longitudinale (X) et une pluralité de couches de fils ou torons de trame (30) s'étendant dans la direction latérale (Y), la structure fibreuse présentant une forme de bande s'étendant dans la direction longitudinale (X) sur une longueur déterminée (L₁₀₀) entre une partie proximale (110) et une partie distale (120) et dans la direction latérale (Y) sur une largeur déterminée (I₁₀₀) entre un premier bord latéral (101) et un deuxième bord latéral (102),
**caractérisé en ce qu'**il comprend le tissage d'une première portion (P1) s'étendant suivant la direction longitudinale sur une longueur déterminée (L_{P1}) à partir de la partie proximale (110) et dans laquelle une ou plusieurs couches de la pluralité couches de fils ou torons de trame sont constituées d'une pluralité de groupes de fils ou torons comprenant chacun au moins un fil ou toron en fibres de carbone (Tc1-Tc9) et un fil ou torons en fibres de verre (Tv1-Tv9), le fil ou toron en fibres de carbone et le fil ou torons en fibres de verre de chaque groupe de fils étant tissés ensemble suivant le même motif ou armure de tissage, le procédé comprenant en outre le tissage d'une deuxième portion (P2) présente suivant la direction longitudinale entre la première portion et la partie distale de ladite texture fibreuse dans laquelle les couches de la pluralité de fils ou torons de trame comportent des fils ou torons en fibres de carbone (Tc1-Tc9).

9. Procédé selon la revendication 8, dans lequel des couches de la pluralité couches de fils ou torons de trame présentes dans la première portion du côté d'une face interne (F1) de la texture fibreuse (100) comportent d'une pluralité de groupes de fils ou torons comprenant chacun au moins un fil ou toron en fibres de carbone et un fil ou toron en fibres de verre, les autres couches de fils ou torons de trame présentes du côté d'une face externe (F2) de la texture fibreuse comportant des fils ou torons en fibres de carbone.

10. Procédé selon la revendication 8 ou 9, dans lequel la première portion de la texture fibreuse comporte une partie de rétention s'étendant en retrait des bords latéraux de ladite structure fibreuse suivant la direction latérale, une partie d'entrée de fils ou torons située entre le premier bord latéral de la texture fibreuse et la partie de rétention et dans laquelle des fils ou torons en fibres de verre sont progressivement insérés dans des couches de la pluralité couches de fils ou torons de trame, et une partie de sortie de fils ou torons située entre la partie de rétention et le deuxième bord latéral de la texture fibreuse et dans laquelle des fils ou torons en fibres de verre sont progressivement retirés des couches de la pluralité couches de fils ou torons de trame, la partie de rétention comprenant un nombre de fils ou torons en fibres de verre plus important que dans les parties d'entrée et de sortie des fils ou torons.

## Patentansprüche

1. Fasertextur (100), aufweisend eine Form eines Bandes, das sich in einer Längsrichtung (X) über eine bestimmte Länge (L₁₀₀) zwischen einem proximalen Teil (110) und einem distalen Teil (120) und in einer seitlichen Richtung (Y) über eine bestimmte Breite (I₁₀₀) zwischen einem ersten seitlichen Rand (101) und einem zweiten seitlichen Rand (102) erstreckt, wobei die Fasertextur ein dreidimensionales oder mehrschichtiges Gewebe zwischen einer Vielzahl von Schichten aus Kettfäden oder -litzen (20) aufweist, die sich in der Längsrichtung erstrecken, und einer Vielzahl von Schichten aus Schussfäden oder -litzen (30), die sich in der seitlichen Richtung erstrecken,
**dadurch gekennzeichnet, dass** die Fasertextur einen ersten Abschnitt (P1) umfasst, der sich in der Längsrichtung über eine bestimmte Länge (L_{P1}) ab dem proximalen Teil (110) erstreckt und in dem eine oder mehrere Schichten von der Vielzahl von Schichten aus Schussfäden oder - litzen aus einer Vielzahl von Gruppen von Fäden oder Litzen bestehen, die jeweils mindestens einen Faden oder eine Litze aus Carbonfasern (Tc1-Tc9) und einen Faden oder Litzen aus Glasfasern (Tv1-Tv9) umfasst, wobei der Faden oder die Litze aus Carbonfasern und der Faden oder die Litzen aus Glasfasern jeder Fadengruppe gemeinsam gemäß demselben Gewebemotiv oder -armierung gewebt sind, wobei die Fasertextur ferner einen zweiten Abschnitt (P2) umfasst, der in der Längsrichtung zwischen dem ersten Abschnitt und dem distalen Teil der Fasertextur vorhanden ist, in dem die Schichten von der Vielzahl von Schussfäden oder -litzen Fäden oder Litzen aus Carbonfasern (Tc1-Tc9) aufweisen.

2. Fasertextur nach Anspruch 1, wobei Schichten von der Vielzahl der Schichten aus Schussfäden oder -litzen, die im ersten Abschnitt auf der Seite einer inneren Fläche (F1) der Fasertextur (100) vorhanden sind, eine Vielzahl von Gruppen von Fäden oder Litzen aufweisen, die jeweils mindestens einen Faden oder eine Litze aus Carbonfasern und einen Faden oder eine Litze aus Glasfasern umfassen, wobei die anderen Schichten aus Schussfäden oder -litzen, die auf der Seite einer äußeren Fläche (F2) der Fasertextur vorhanden sind, Fäden oder Litzen aus Carbonfasern aufweisen.

3. Fasertextur nach Anspruch 1 oder 2, wobei der erste Abschnitt der Fasertextur einen Rückhalteteil (130) aufweist, der sich von den seitlichen Rändern (101, 102) der Fasertextur in seitlicher Richtung (Y) zurückgesetzt erstreckt, wobei der Rückhalteteil eine Anzahl von Fäden oder Litzen aus Glasfasern umfasst, die höher als in den zum Rückhalteteil benachbarten Teilen (140, 150) in seitlicher Richtung ist.

4. Faserige Vorform (60) eines Luftfahrtgehäuses (810), umfassend eine Wicklung über mehrere Umdrehungen einer Fasertextur (100) nach einem der Ansprüche 1 bis 3, wobei sich der erste Abschnitt (P1) auf der Seite einer radial inneren Fläche der Vorform befindet und sich der zweite Abschnitt (P2) auf der Seite einer radial äußeren Fläche der Vorform befindet.

5. Gasturbinengehäuse (810) aus einem Verbundmaterial, umfassend eine Faserverstärkung, die aus einer faserigen Vorform (60) nach Anspruch 4 besteht, und eine die Faserverstärkung verdichtende Matrix.

6. Gehäuse (810) nach Anspruch 5, wobei das Gehäuse ein Gasturbinen-Gebläsegehäuse ist.

7. Gasturbinen-Flugzeugmotor (80) mit einem Gehäuse (810) nach Anspruch 5 oder 6.

8. Verfahren zur Herstellung einer Fasertextur (100) durch dreidimensionales oder mehrschichtiges Weben zwischen einer Vielzahl von Schichten aus Kettfäden oder -litzen (20), die sich in einer Längsrichtung (X) erstrecken, und einer Vielzahl von Schichten aus Schussfäden oder -litzen (30), die sich in der seitlichen Richtung (Y) erstrecken, wobei die Fasertextur eine Form eines Bandes aufweist, das sich in der Längsrichtung (X) über eine bestimmte Länge (L₁₀₀) zwischen einem proximalen Teil (110) und einem distalen Teil (120) und in der seitlichen Richtung (Y) über eine bestimmte Breite (I₁₀₀) zwischen einem ersten seitlichen Rand (101) und einem zweiten seitlichen Rand (102) erstreckt,
**dadurch gekennzeichnet, dass** es das Weben eines ersten Abschnitts (P1) umfasst, der sich in der Längsrichtung über eine bestimmte Länge (L_{P1}) ab dem proximalen Teil (110) erstreckt und in dem eine oder mehrere Schichten von der Vielzahl von Schichten aus Schussfäden oder -litzen aus einer Vielzahl von Gruppen von Fäden oder Litzen bestehen, die jeweils mindestens einen Faden oder eine Litze aus Carbonfasern (Tc1-Tc9) und einen Faden oder Litzen aus Glasfasern (Tv1-Tv9) umfasst, wobei der Faden oder die Litze aus Carbonfasern und der Faden oder die Litzen aus Glasfasern jeder Fadengruppe gemeinsam gemäß demselben Gewebemotiv oder -armierung gewebt sind, wobei das Verfahren ferner das Weben eines zweiten Abschnitts (P2) umfasst, der in der Längsrichtung zwischen dem ersten Abschnitt und dem distalen Teil der Fasertextur vorhanden ist, in dem die Schichten von der Vielzahl von Schuss fäden oder -litzen Fäden oder Litzen aus Carbonfasern (Tc1-Tc9) aufweisen.

9. Verfahren nach Anspruch 8, wobei Schichten von der Vielzahl von Schichten aus Schussfäden oder -litzen, die im ersten Abschnitt auf der Seite einer inneren Fläche (F1) der Fasertextur (100) vorhanden sind, eine Vielzahl von Gruppen von Fäden oder Litzen aufweisen, die jeweils mindestens einen Faden oder eine Litze aus Carbonfasern und einen Faden oder eine Litze aus Glasfasern umfassen, wobei die anderen Schichten aus Schussfäden oder -litzen, die auf der Seite einer äußeren Fläche (F2) der Fasertextur vorhanden sind, Fäden oder Litzen aus Carbonfasern aufweisen.

10. Verfahren nach Anspruch 8 oder 9, wobei der erste Abschnitt der Fasertextur einen Rückhalteteil aufweist, der sich von den seitlichen Rändern der Fasertextur in seitlicher Richtung zurückgesetzt erstreckt, einen Eintrittsteil von Fäden oder Litzen, der sich zwischen dem ersten seitlichen Rand der Fasertextur und dem Rückhalteteil befindet und in den Fäden oder Litzen aus Glasfasern schrittweise in Schichten von der Vielzahl von Schichten aus Kettfäden oder -litzen eingeführt werden, und einen Austrittsteil von Fäden oder Litzen, der sich zwischen dem Rückhalteteil und dem zweiten seitlichen Rand der Fasertextur befindet und in dem Fäden oder Litzen aus Glasfasern schrittweise aus Schichten von der Vielzahl von Schichten aus Kettfäden oder -litzen entfernt werden, wobei der Rückhalteteil eine Anzahl von Fäden oder Litzen aus Glasfasern umfasst, die höher als im Eintritts- und Austrittsteil der Fäden oder Litzen ist.

## Claims

1. A strip-shaped fibrous texture (100 extending in a longitudinal direction (X) over a determined length (L₁₀₀) between a proximal portion (110) and a distal portion (120) and in a lateral direction (Y) over a determined width (I₁₀₀) between a first lateral edge (101) and a second lateral edge (102), the fibrous texture having a three-dimensional or multi-layered weaving between a plurality of layers of warp yarns or strands (20) extending in the longitudinal direction and a plurality of layers of weft yarns or strands (30) extending in the lateral direction,
**characterized in that** the fibrous texture comprises a first section (P1) extending along the longitudinal direction over a determined length (L_{P1}) from the proximal portion (110) and in which one or more layers of the plurality of layers of weft yarns or strands consist of a plurality of groups of yarns or strands each comprising at least one carbon fiber yarn or strand (Tc1-Tc9) and one glass fiber yarn or strand (Tv1-Tv9), the carbon fiber yarn or strand and the glass fiber yarn or strand of each group of yarns being woven together according to the same weaving pattern or weave, the fibrous texture further comprising a second section (P2) present along the longitudinal direction between the first section and the distal portion of said fibrous texture in which the layers of the plurality of weft yarns or strands include carbon fiber yarns or strands (Tc1-Tc9).

2. The fibrous texture according to claim 1, wherein layers of the plurality of layers of weft yarns or strands present in the first section on the side of an inner face (F1) of the fibrous texture (100) include a plurality of groups of yarns or strands each comprising at least one carbon fiber yarn or strand and one glass fiber yarn or strand, the other layers of weft yarns or strands present on the side of an outer face (F2) of the fibrous texture including carbon fiber yarns or strands.

3. The fibrous texture according to claim 1 or 2, wherein the first section of the fibrous texture includes a retention portion (130) extending set back from the lateral edges (101, 102) of said fibrous structure along the lateral direction (Y), the retention portion comprising a greater number of glass fiber yarns or strands than in the portions (140, 150) adjacent to the retention portion along the lateral direction.

4. A fibrous preform (60) of an aircraft casing (810) comprising a winding over several turns of a fibrous texture (100) according to any one of claims 1 to 3, the first section (P1) being located on the side of a radially inner face of the preform and the second section (P2) being located on the side of a radially outer face of the preform.

5. A gas turbine casing (810) made of composite material, comprising a fibrous reinforcement consisting of a fibrous preform (60) according to claim 4, and a matrix densifying the fibrous reinforcement.

6. The casing (810) according to claim 5, wherein said casing is a gas turbine fan casing.

7. An aircraft gas turbine engine (80) having a casing (810) according to claim 5 or 6.

8. A method for manufacturing a fibrous texture (100) by three-dimensional or multi-layered weaving between a plurality of layers of warp yarns or strands (20) extending in a longitudinal direction (X) and a plurality of layers of weft yarns or strands (30) extending in the lateral direction (Y), the strip-shaped fibrous structure extending in the longitudinal direction (X) over a determined length (L₁₀₀) between a proximal portion (110) and a distal portion (120) and in the lateral direction (Y) over a determined width (I₁₀₀) between a first lateral edge (101) and a second lateral edge (102),
**characterized in that** it comprises the weaving of a first section (P1) extending along the longitudinal direction over a determined length (L_{P1}) from the proximal portion (110) and in which one or more layers of the plurality of layers of weft yarns or strands consist of a plurality of groups of yarns or strands each comprising at least one carbon fiber yarn or strand (Tc1-Tc9) and one glass fiber yarn or strand (Tv1-Tv9), the carbon fiber yarn or strand and the glass fiber yarn or strand of each group of yarns being woven together along the same weaving pattern or weave, the method further comprising the weaving of a second section (P2) present along the longitudinal direction between the first section and the distal portion of said fibrous texture in which the layers of the plurality of weft yarns or strands include carbon fiber yarns or strands (Tc1-Tc9).

9. The method according to claim 8, wherein layers of the plurality of layers of weft yarns or strands present in the first section on the side of an inner face (F1) of the fibrous texture (100) include a plurality of groups of yarns or strands each comprising at least one carbon fiber yarn or strand and one glass fiber yarn or strand, the other layers of weft yarns or strands present on the side of an outer face (F2) of the fibrous texture including carbon fiber yarns or strands.

10. The method according to claim 8 or 9, wherein the first section of the fibrous texture includes a retention portion extending set back from the lateral edges of said fibrous structure along the lateral direction, a yarn or strand inlet portion located between the first lateral edge of the fibrous texture and the retention portion and in which glass fiber yarns or strands are gradually inserted into layers of the plurality of layers of weft yarns or strands, and a yarn or strand outlet portion located between the retention portion and the second lateral edge of the fibrous texture and in which glass fiber yarns or strands are gradually withdrawn from the layers of the plurality of layers of weft yarns or strands, the retention portion comprising a larger number of glass fiber yarns or strands than in the yarn or strand inlet and outlet portions.
